(19) Europäisches Patentamt

European Patent Office

Office européen des brevets

(11) Numéro de publication: **0 518 832 A1**

(12) **DEMANDE DE BREVET EUROPEEN**

(21) Numéro de dépôt: **92830305.6**

(22) Date de dépôt: **10.06.92**

(51) Int. Cl.⁵: **F01L 1/34, F16H 35/02**

PRIORITY 110691 IT FI91000137.

(30) Priorité: **11.06.91 IT FI910137**

(43) Date de publication de la demande:
**16.12.92 Bulletin 92/51**

(84) Etats contractants désignés:
**AT DE DK ES FR GB IT NL SE**

(71) Demandeur: **Baldassini, Lando**
**Via della Fortezza, 6**
**S. Piero a Sieve (Firenze)(IT)**

(72) Inventeur: **Baldassini, Lando**
**Via della Fortezza, 6**
**S. Piero a Sieve (Firenze)(IT)**

(74) Mandataire: **Martini, Lazzaro**
**Ufficio Brevetti Ing. Lazzaro Martini Via dei**
**Rustici 5**
**I-50122 Firenze(IT)**

(54) Timing device in a four stroke engine with cyclically variable camshaft revolving speed.

(57) Dispositif de distribution pour moteur à quatre temps avec au-moins un arbre (2) à cames (7) situé sur la tête des cylindres et avec les cames (7) agissant directement sur les soupapes (4), dans lequel le mouvement de rotation de chaque arbre (2) à cames (7) est dérivé d'un arbre (1) de renvoi parallèle à l'arbre (2) à cames (7) et commandé par le vilebrequin du moteur, au moyen d'une paire de roues dentées (3,30), identiques, lesquelles sont calées de manière excentrique, l'une (3) sur l'arbre (1) de renvoi et l'autre (30) sur l'arbre (2) à cames (7) et, par ailleurs, sont déphasées entre elles de 180° et avec la came (7) qui est destinée à l'ouverture de la soupape correspondante (4) calée sur l'arbre (2) à cames (7), avec le rayon (r2) maximum de la levée en phase avec le rayon minimum (R1) de rotation de la roue dentée correspondante (30) calée de manière excentrique sur le même arbre (2) à cames (7).

Fig. 3

La présente invention concerne un dispositif de distribution dans un moteur à quatre temps avec arbres à cames à vitesse de rotation différenciée.

Il est connu que la distribution à soupapes en tête dans les moteurs à combustion interne à quatre temps très rapides, tels que ceux de compétition, prévoit l'utilisation d'au-moins un arbre des excentriques situé sur la tête des cylindres et avec les excentriques qui commandent l'ouverture des soupapes avec ou sans interposition de culbuteurs, alors que la fermeture des soupapes est réalisée par des ressorts de rappel très robustes.

Selon ce type connu de distribution, le mouvement des arbres des excentriques est obtenu avec des roues dentées au moyen desquelles le tour de rotation des excentriques est subdivisé en deux arcs égaux de 180°, l'un pour l'ouverture et l'autre pour la fermeture de chaque soupape, chaque arc étant parcouru avec une vitesse égale et donc dans un même temps.

La présente invention a pour but d'obtenir une rotation de l'arbre à cames sur 180° à vitesse minimum et sur 180° à vitesse maximum, la vitesse maximum et respectivement la vitesse minimum étant destinée à la fermeture et respectivement à l'ouverture de la soupape correspondante.

Ce résultat a été atteint conformément à l'invention en réalisant un dispositif de distribution pour moteur à quatre temps avec au-moins un arbre à cames situé sur la tête des cylindres et avec les cames agissant directement sur les soupapes, dans lequel le mouvement de rotation de chaque arbre à cames est dérivé d'un arbre de renvoi, parallèle à l'arbre à cames et commandé par le vilebrequin du moteur, au moyen d'une paire de roues dentées, identiques, lesquelles sont calées de manière excentrique, l'une sur l'arbre de renvoi et l'autre sur l'arbre à cames et, par ailleurs, sont déphasées entre elles de 180° et avec la came qui est destinée à l'ouverture de la soupape correspondante calée sur l'arbre à cames, avec le rayon maximum de la levée en phase avec le rayon minimum de rotation de la roue dentée correspondante calée de manière excentrique sur le même arbre à cames.

Les avantages obtenus grâce à la présente invention consistent essentiellement dans le fait qu'il est possible d'allonger la phase de décélération pendant l'ouverture de la soupape et cela même avec des profils peu prononcés des cames; qu'il est possible de réduire l'effort nécessaire pour vaincre la résistance des ressorts de rappel des soupapes, grâce au gain dû à la différence de rayons de rotation des roues excentriques; qu'un dispositif selon l'invention est construction facile et de grande fiabilité même aux vitesses élevées.

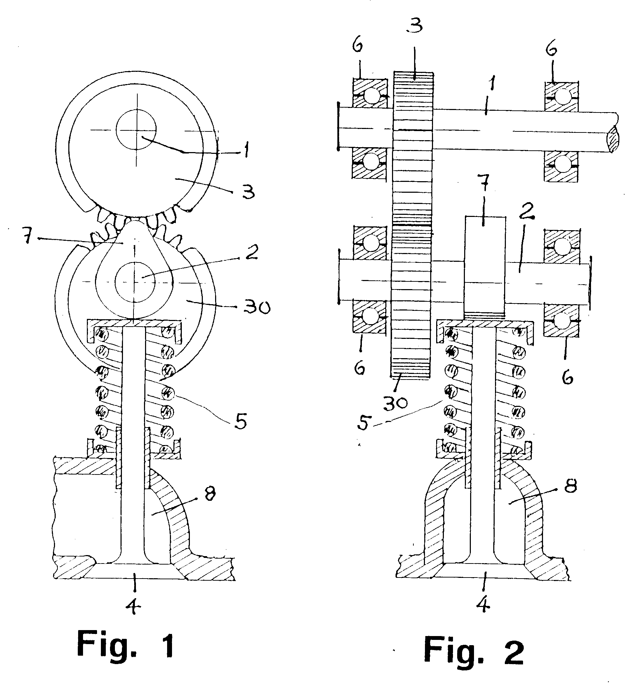

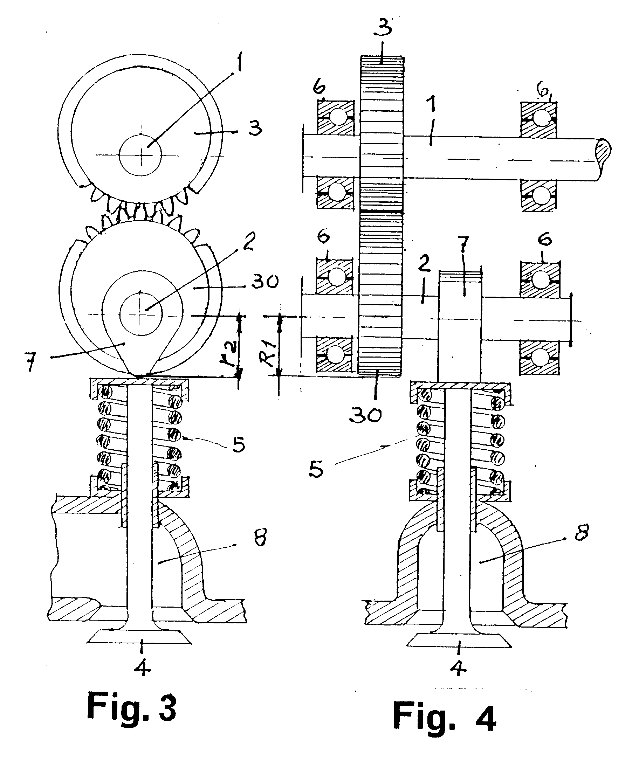

Ces avantages et caractéristiques de l'invention ainsi que d'autres seront plus et mieux compris de chaque homme du métier à la lumière de la description qui va suivre et à l'aide des dessins annexés, donnés à titre d'exemplification pratique de l'invention, mais à ne pas considérer dans le sens limitatif; dessins sur lesquels: la FIG. 1 représente la vue de face, en partie en coupe, d'un dispositif selon l'invention pour la commande d'une soupape pour moteur à quatre temps dans la position de soupape fermée avec la came à l'accélération maximum; la FIG. 2 représente la vue de côté du dispositif de la Fig. 1; la FIG. 3 représente la vue de face du dispositif de la Fig. 1 dans la position de soupape ouverte avec la came à la décélération maximum; la FIG. 4 représente la vue de côté du dispositif de la Fig. 3.

Réduit à sa structure essentielle et en référence aux figures des dessins annexés, un dispositif de distribution dans un moteur à quatre temps avec arbre à cames à vitesse de rotation différenciée, conformément à l'invention, comprend:

- un arbre (1) de renvoi, monté sur des paliers (6), lequel est situé sur la tête du cylindre et commandé par le vilebrequin du moteur de manière connue en soi et non représentée par simplification;

- un arbre (2) parallèle à celui de renvoi (1) avec une came (7) d'ouverture de la soupape (4) du conduit (8) d'admission ou d'échappement;

- une paire de roues dentées identiques (3,30), lesquelles sont calées de manière excentrique, l'une (3) sur l'arbre (1) et l'autre (30) sur l'arbre (2) et déphasées entre elles de 180° pour permettre qu'à chaque tour à vitesse constante de l'arbre (1), l'arbre (2) accomplisse un demi-tour à vitesse minimum et un demi-tour à vitesse maximum: la came (7) étant calée sur l'arbre (2) avec le rayon (r2) de levée maximum en phase avec le rayon minimum (R1) de rotation de la roue (30). De cette manière, l'ouverture de la soupape a lieu pendant le demi-tour que l'arbre (2) accomplit à vitesse minimum et donc dans un temps plus important que celui de fermeture.

Il va de soi que l'arbre de renvoi (1) peut commander la rotation de deux arbres à cames (2), l'un pour actionner la/les vanne/s d'admission et l'autre pour actionner la/les vanne/s d'échappement, et cela dans un moteur monocylindrique, tout comme il peut commander plusieurs arbres à cames (2) disposés en ligne pour un moteur à plusieurs cylindres.

Conformément à l'invention, il est avantageusement prévu que la valeur de l'excentricité de calage des roues dentées (3,30) sur les arbres (1,2) puisse varier à volonté en relation avec la durée voulue pour la phase d'ouverture/fermeture de la soupape correspondante (4) en utilisant une came (7) de profit unique.

Toujours conformément à l'invention, il est prévu d'utiliser une même paire de roues dentées (3,30), mais avec denture carrigée, pour permettre d'adopter l'excentricité de calage la plus grande possible.

**Revendications**

1. Dispositif de distribution dans un moteur à quatre temps avec les arbres (7) des cames (7) situés sur la tête des cylindres et avec les cames (7) agissant sur le plateau des soupapes (4), caractérisé en ce qu'il comprend un arbre de renvoi (1) parallèle aux arbres à cames (2) et commandé par le vilebrequin du moteur, lequel transmet le mouvement aux arbres (2) à cames (7) au moyen de paires de roues dentées identiques (3,30), lesquelles sont calées de manière excentrique, l'une (3) sur l'arbre de renvoi (1) et l'autre (30) sur l'arbre (2) à cammes (7) correspondant et déphasées entre elles de 180° de manière qu'à chaque tour de l'arbre de renvoi (1) à vitesse de rotation constante, l'arbre (2) des cammes (7) accomplisse un demi-tour à vitesse de rotation minimum et un demi-tour à vitesse maximum.

2. Dispositif selon la revendication 1, caractérisé en ce que la came (7) destinée à l'ouverture de la soupape correspondante (4) est calée sur l'arbre à cames (2) correspondant avec le rayon (r2) maximum de la levée en phase avec le rayon minimum (R1) de rotation de la roue dentée correspondante (30).

3. Dispositif selon la revendication 1, caractérisé en ce qu'il comprend deux arbres (2) des cames (7) pour chaque cylindre du moteur, l'un pour la/les vanne/s (4) d'admission et l'autre pour la/les vanne/s (4) d'échappement.

4. Dispositif selon la revendication 1, caractérisé en ce que lesdites roues dentées (3,30) sont avec denture corrigée pour permettre une plus grande excentricité de calage.

5. Dispositif selon la revendication 1, caractérisé en ce que la valeur de l'excentricité de calage des roues dentées (3,30) sur les arbres (1,2) est variable à volonté en relation avec la durée des phases d'ouverture et de fermeture de la soupape correspondante (4) qu'on veut obtenir avec un même profil de la came (7).

**Fig. 1**

**Fig. 2**

Fig. 3

Fig. 4

Office européen
des brevets

**RAPPORT DE RECHERCHE EUROPEENNE**

Numero de la demande

EP    92 83 0305

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-863 706 (KAMMER) <br> * page 1, ligne 1 - ligne 18 * <br> * page 1, ligne 40 - ligne 52 * <br> * page 2, ligne 29 - ligne 91 * <br> * figures 1,3 * <br> --- | 1 | F01L1/34 <br> F16H35/02 |
| A | PATENT ABSTRACTS OF JAPAN <br> vol. 7, no. 68 (M-201)(1213) 19 Mars 1983 <br> & JP-A-57 210 109 ( SUZUKI ) 23 Décembre 1982 <br> * abrégé * <br> --- | 3 | |
| A | JOURNAL OF ENGINEERING FOR INDUSTRY <br> vol. 96, no. 21, Février 1974, NEW YORK USA <br> pages 94 - 100; <br> KEN ICHI MITOME: 'eccentric gearing' <br> *page 100, point 5 in the conclusion paragraph* <br> * figure 1 * <br> --- | 4 | |
| A | MACHINE DESIGN <br> vol. 25, no. 5, Mai 1953, CLEVELAND USA <br> pages 141 - 150; <br> GRODZINSKI: 'eccentric gear mechanisms' <br> * page 149; figure 18 * <br><br> ----- | 5 | **DOMAINES TECHNIQUES RECHERCHES (Int. Cl.5)** <br><br> F01L <br> F16H <br> F16O |

Le présent rapport a été établi pour toutes les revendications

| Lieu de la recherche | Date d'achèvement de la recherche | Examinateur |
|---|---|---|
| LA HAYE | 02 SEPTEMBRE 1992 | LEFEBVRE L.J.F. |